# EUROPEAN PATENT APPLICATION

(11) **EP 1 860 555 A2**
(43) Date of publication of application: **28.11.2007**
(21) Application number: 07105849.9
(22) Date of filing: 10.04.2007
(51) Int. Cl.: G06F 9/54

(54) **Media subsystem, method and computer program product for adaptive media buffering**

(30) Priority: 11.04.2006 US 321796
(71) Applicant: Nokia Corporation, 02150 Espoo (FI)
(72) Inventor: Hiipakka, Jarmo, FIN-02210, Espoo (FI); Ingalsuo, Seppo, FIN-33580, Tempere (FI); Wallius, Pekka, FIN-90560, Oulu (FI)
(74) Representative: Walaski, Jan Filip

(57) **Abstract**

A media subsystem of a processing element includes a plurality of elements and a latency manager. The plurality of elements are capable of processing media data including a plurality of instances wherein a first element inserts a length of media data into buffer(s) from which a second element thereafter reads the length of media data for subsequent output from the media subsystem. The latency manager is capable of determining a latency requirement of the media subsystem, and then dynamically tuning the length of media data inserted into the buffer(s) based upon the latency requirement, including increasing or decreasing the length of media data inserted into the buffer(s) during one or more instances(s).

## Description

### FIELD OF THE INVENTION

Embodiments of the present invention generally relates to systems and methods for optimizing media playback in a playback device and, more particularly, relates to systems and methods for adaptive media buffering during media playback to optimize playback while reducing power consumption of the playback device.

### BACKGROUND OF THE INVENTION

Audio processing is very time-critical by nature. In many conventional audio playback devices, an audio subsystem reads data from memory and produces a block of audio samples from that data, while simultaneously playing out a previously produced block. If the processing or generation of a new block takes more time than playing out one block, then a gap (referred to as "drop-out") can be heard in the audio playback. In order to avoid such a drop-out, it is possible to queue up more than one produced block for playback in a buffer.

The audio buffering between two independently running parts of the audio chain can be seen as a first-in-first-out (FIFO) queue. The characteristic parameters for the buffering are the total maximum length of the queue and the wakeup point. Consider, for example, an audio application writing audio samples to audio hardware, such as a sound card in a personal computer. The audio hardware reads audio sample values from one end of the queue as the application writes new samples to the other end. In accordance with one buffering technique, the application can fill the queue with blocks of audio samples, and then go to sleep against a synchronization object of some sort. The audio hardware can autonomously read samples from the queue, then, when the audio hardware reaches a wakeup point (i.e., there is only a predetermined length of audio samples in the queue), the hardware can wake the application up to produce more blocks of audio samples.

The above process can be repeated from the beginning for the duration of audio playback. In real-time applications, it can be important to set up the buffering parameters so that, after being woken up, the application has sufficient time to write new blocks of samples to the queue before the queue is completely emptied by the audio hardware. Should the application fail to provide the new samples in time, a drop-out is heard in the audio signal.

The queue technique can be implemented as a set of memory buffers shared between the application and the audio hardware of a playback device. In this regard, in one common arrangement, referred to as the double-buffering technique, an application can write blocks of audio samples to one buffer while the hardware reads from another buffer. When the hardware has finished reading from one buffer, it releases the buffer for the application to fill, and continues playback from the other buffer.

In real-time applications, the goal can be to minimize the length of audio buffered between the application and the hardware (although referred to as a "length," such a measure may be a temporal measure). By minimizing the length of buffered audio, both memory consumption and the interactive latency (i.e., the time from user interaction to the corresponding change in the output audio signal) can be minimized. This can be achieved using the double-buffering technique and selecting the buffer size so that, taking into account operating system (OS) maximum scheduling latencies and the maximum required processing time, the audio application can produce the next buffer just in time, before the audio hardware has consumed the previous buffer.

However, what is useful for a low-latency application may not be optimal for energy efficiency in devices, such as mobile devices, that have power consumption limitations. In this regard, the optimal audio buffering parameters for maximum battery life may be such that the wakeup point remains at its minimum value and the buffer length under given memory consumption and latency requirements is at its maximum, taking into account all system latencies, and the maximum buffer length. Such a configuration makes it possible for the audio application to produce a large length of audio samples, and then sleep for an extended time period. During the sleep period, the processor may be put to a power saving mode with minimal current consumption and no processing, provided there are no other applications requiring the processor. The processors used in embedded devices typically sport different power saving modes for different use cases. What is common to all modes is that they usually have an associated non-zero shut-down/power-up cycle, which makes usage inefficient for short sleep periods. This is why it is advantageous for the audio application to also sleep for as long as possible. Thus, controlling the buffering along the audio path may be important for achieving best possible energy efficiency. This is true especially for the modem application processors with high processing power and leakage current.

### SUMMARY OF THE INVENTION

In light of the foregoing background, exemplary embodiments of the present invention provide an improved system, method and computer program product for adaptive media buffering in a media subsystem of a processing element. In accordance with exemplary embodiments of the present invention, a media subsystem may be adaptively and dynamically tuned for reduced power consumption or reduced latency based upon latency requirements of the subsystem. Thus, for example, the subsystem may be tuned by adaptively and dynamically tuning the length of data inserted into one or more buffers, where increasing the length of data into the buffers tunes the subsystem for reduced power consumption and decreasing the length of data into the buffers tunes the subsystem for reduced latency.

According to one aspect of the present invention, a media subsystem of a processing element is provided, the media subsystem comprising a plurality of means for performing adaptive media buffering in the media subsystem. These means may include, for example, first and second means, such as first and second elements, and third and fourth means, which may collectively form a latency manager. The plurality of elements are capable of processing media data including a plurality of instances wherein a first element inserts a length of media data into at least one buffer from which a second element thereafter reads the length of media data for subsequent output from the media subsystem. In this regard, at least some of the instances may be initiated by the second element waking up the first element from a reduced-power sleep state.

The latency manager is capable of operating during processing of the media data to determine a latency requirement of the media subsystem, where the latency comprises a delay between an interaction with the processing element and a corresponding change in the output from the media subsystem. The latency manager can then dynamically tune the length of media data inserted into the buffer(s) based upon the latency requirement, including increasing or decreasing the length of media data inserted into the buffer(s) during one or more instances(s).

More particularly, the first element (e.g., mixer) can be capable of receiving a length of decoded media data from a codec and inserting the length of decoded media data into second-level buffer(s) (e.g., mixer-level buffer(s)) from which the second element (e.g., media device) is thereafter capable of reading the length of decoded media data. In other cases, the first element (e.g., user application) can be capable of receiving a length of media data from a source and inserting the length of media data into first-level buffer(s) (e.g., application-level buffer(s)) from which the second element (e.g., mixer) is thereafter capable of reading the length of media data. In such cases, the second element can be capable of communicating with a codec to decode the length of media data, and inserting the length of decoded media data into second-level buffer(s) from which a fifth means, such as a third element (e.g., media device), is thereafter capable of reading the length of decoded media data. The latency manager, then, can tune the length of media data inserted into the first-level buffer(s) and/or the second-level buffer(s).

The latency manager can determine the subsystem latency requirement in a number of different manners. For example, the latency manager can be capable of determining a latency requirement of the media subsystem based upon an event reflective of the latency requirement. Additionally or alternatively, the latency manager can be capable of determining a latency requirement of the media subsystem based upon a latency requirement of the first element (e.g., user application). In this regard, in various cases the first element includes a plurality of first elements (e.g., plurality of applications) that each have an associated latency requirement. In these cases, each of the first elements can be capable of receiving a length of media data from a source and capable of inserting the length of media data into respective buffer(s) from which the second element (e.g., mixer) is thereafter capable of reading the length of media data. The latency manager can then be capable of setting the latency requirement of the subsystem equal to the lowest latency requirement of the first elements, for example.

According to other aspects of the present invention, a method and a computer program product are provided for adaptive media buffering. Exemplary embodiments of the present invention therefore provide an improved media subsystem, method and computer program product for adaptive media buffering. And as indicated above and explained in greater detail below, the media subsystem, method and computer program product of exemplary embodiments of the present invention may solve at least some of the problems identified by prior techniques and may provide additional advantages.

### BRIEF DESCRIPTION OF THE DRAWINGS

Having thus described the invention in general terms, reference will now be made to the accompanying drawings, which are not necessarily drawn to scale, and wherein:
FIG. 1 is a block diagram of a system for adaptive buffering of media, in accordance with exemplary embodiments of the present invention;
FIG. 2 is a schematic block diagram of a processing element of the system of FIG. 1, in accordance with exemplary embodiments of the present invention;
FIG. 3 is a functional block diagram of a media subsystem of the processing element of FIG. 2, in accordance with exemplary embodiments of the present invention; and
FIG. 4 is a flowchart illustrating various steps in a method of adaptive media buffering, in accordance with exemplary embodiments of the present invention.

### DETAILED DESCRIPTION OF THE INVENTION

The present invention now will be described more fully hereinafter with reference to the accompanying drawings, in which preferred exemplary embodiments of the invention are shown. This invention may, however, be embodied in many different forms and should not be construed as limited to the exemplary embodiments set forth herein; rather, these exemplary embodiments are provided so that this disclosure will be thorough and complete, and will fully convey the scope of the invention to those skilled in the art. Like numbers refer to like elements throughout.

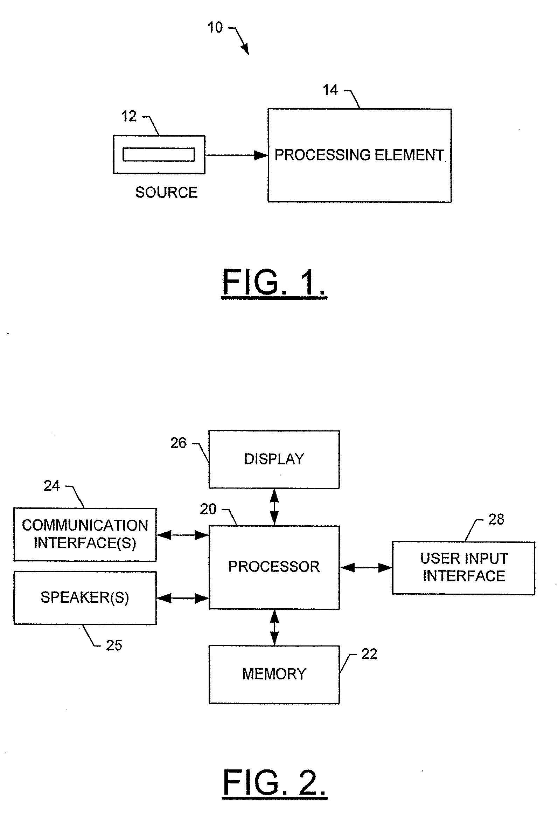

Referring to FIG. 1, an illustration of one system that would benefit from the present invention is provided. The system, method and computer program product of exemplary embodiments of the present invention will be primarily described without respect to the environment within which the system, method and computer program product operate. It should be understood, however, that the system, method and computer program product may operate in a number of different environments, including mobile and/or fixed environments, wireline and/or wireless environments, standalone and/or networked environments or the like. For example, the system, method and computer program product of exemplary embodiments of the present invention can operate in mobile communication environments whereby mobile terminals operating within one or more mobile networks include or are otherwise in communication with one or more sources of media.

The system **10** includes one or more media sources **12** coupled to a processing element **14,** such as directly or via one or more networks (e.g., data networks, voice communication networks, etc.). Although shown as separate entities, it should be understood that in some embodiments, a single entity may support the processing element and one or more media sources, logically separated but co-located within the respective entity. For example, a mobile terminal may support a logically separate, but co-located media source and processing element. Irrespective of the manner of implementing the system, however, the media source can comprise any of a number of different entities capable of providing data of one or more different types of media (e.g., audio, video, audio-video, etc.). Like the media source, the processing element can comprise any of a number of different entities capable of processing media data from the media source, such as for playback of the media, as explained below. In this regard, the media provided by the media source can comprise any of a number of different types of media in any of a number of different formats. The media source can comprise, for example, a video capture device (e.g., video camera), a video cassette recorder (VCR), DVD player, CD player, a fixed or mobile telephone, terminal or other voice communication device, a media file stored in memory of a remote server, or the like. In this regard, the media source can be capable of providing media data in a number of different formats including, for example, audio formats such as AIFF (Audio Interchange File Format), AU, CDDA (CD Digital Audio), MP3 (MPEG-1 Audio Layer 3), WMA (Windows Media® Audio), QuickTime®, RealAudio®, WAV form audio, or the like.

Referring now to FIG. 2, a block diagram of an entity capable of operating as a processing element **14** is shown in accordance with one exemplary embodiment of the present invention. As shown, the processing element includes various means for performing one or more functions in accordance with exemplary embodiments of the present invention, including those more particularly shown and described herein. It should be understood, however, that the processing element may include alternative means for performing one or more like functions, without departing from the spirit and scope of the present invention. More particularly, for example, as shown in FIG. 2, the processing element can include a processor **20** connected to a memory **22.** The memory can comprise volatile and/or non-volatile memory, and typically stores content, data or the like. For example, the memory can store applications, instructions or the like for the processor to perform steps associated with operation of the entity in accordance with exemplary embodiments of the present invention. In this regard, the memory can store one or more user applications for playback of media, such as that received from a media source **12** or stored by the processing element. In this regard, the memory of the processing element may further store media data.

As described herein, the application(s), instructions or the like may comprise software operated by the processing element **14.** It should be understood, however, that any one or more of the applications described herein can alternatively comprise firmware or hardware, without departing from the spirit and scope of the present invention. Generally, then, the processing element can include one or more logic elements for performing various functions of one or more application(s), instructions or the like. As will be appreciated, the logic elements can be embodied in any of a number of different manners. In this regard, the logic elements performing the functions of one or more applications, instructions or the like can be embodied in an integrated circuit assembly including one or more integrated circuits integral or otherwise in communication with the processing element or more particularly, for example, the processor **20** of the processing element. The design of integrated circuits is by and large a highly automated process. In this regard, complex and powerful software tools are available for converting a logic level design into a semiconductor circuit design ready to be etched and formed on a semiconductor substrate. These software tools automatically route conductors and locate components on a semiconductor chip using well established rules of design as well as huge libraries of pre-stored design modules. Once the design for a semiconductor circuit has been completed, the resultant design, in a standardized electronic format (e.g., Opus, GDSII, or the like) may be transmitted to a semiconductor fabrication facility or "fab" for fabrication.

In addition to the memory **22,** the processor **20** can also be connected to at least one interface or other means for presenting, transmitting and/or receiving data, content or the like. In this regard, the interface(s) can include at least one communication interface **24** or other means for transmitting and/or receiving data, content or the like. In addition to the communication interface(s), the interface(s) can also include at least one user interface that can include one or more earphones and/or speakers **25,** a display **26,** and/or a user input interface **28.** The user input interface, in turn, can comprise any of a number of devices allowing the entity to receive data from a user, such as a microphone, a keypad, a touch display, a joystick, image capture device (e.g., digital camera) or other input device.

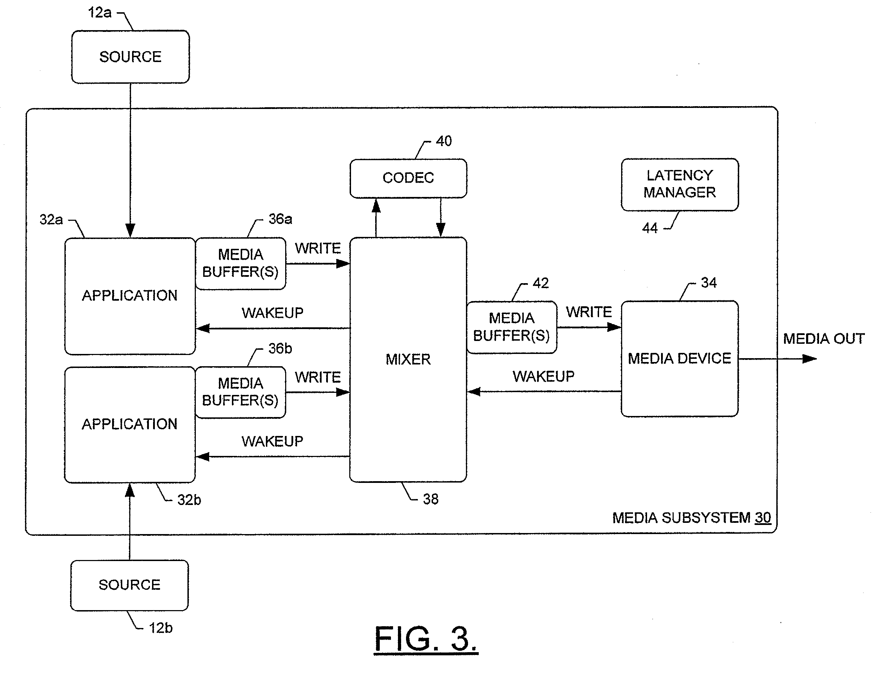

Reference is now made to FIG. 3, which illustrates a functional block diagram of a media subsystem **30** of the processing element **14** of FIG. 2 interacting with one or more sources **12,** and also depicts media flow during media playback, in accordance with exemplary embodiments of the present invention. Although shown and described with respect to media playback, it should be appreciated that exemplary embodiments of the present invention are equally applicable to other types of media processing, such as for media recording. As also shown the media subsystem **30** includes a number of elements for carrying out exemplary embodiments of the present invention. It should be understood, however, that the subsystem may include additional elements, or include alternative elements for carrying out the functions of one or more of the shown and described elements. Further, although exemplary embodiments of the present invention may be explained with reference to media comprising audio, it should be understood that the media may comprise any of one or more different types of media including, for example, audio, video, audio-video or the like. Thus, although exemplary embodiments of the present invention are described with reference to audio media, it should be understood that exemplary embodiments of the present invention are equally applicable to other types of media.

As shown, the media subsystem **30** is capable of playing back media (e.g., audio, video, audio-video, etc.) from one or more sources **12** (two being shown as sources **12a, 12b)** to one or more media devices **34,** which may comprise, for example, a digital-to-analog converter (DAC), Linux audio API (application programming interface), Windows audio API, a PCM line card (e.g., interface to speakers **25),** another processor or the like. One or more applications **32** (two being shown as applications **32a, 32b)** are capable of directing playback of media from the source(s), including receiving one or more frames of data from those source(s). In this regard, the length or duration of an audio signal contained within the frame may be, for example, in the range of 5 milliseconds (ms) to 100 ms (referred to herein generally as the "frame length," although a temporal measure is intended, not a spatial measure). The application(s) are capable of calculating the playback times for the frame(s), and inserting or queuing the frames into one or more application-level media buffers **36** (e.g., memory **22).** Thereafter, the application(s) may enter a reduced-power sleep state. As shown, each application is capable of inserting its frames into respective application-level media buffer(s) **36a, 36b,** although it should be understood that only one of the applications may insert its frames into application-level buffer(s), or that more than one application may insert its frames into the same application-level buffer(s), without departing from the spirit and scope of the present invention.

As and/or after the application(s) **32** insert the frames of data into the application-level media buffer(s) **36,** a mixer **38** (e.g., application executable or otherwise operable by processor **20)** is capable of reading frames from the application-level buffer(s) and combining the frames from the different applications into a single data stream. In this manner, the mixer, which may also be associated with one or more effects, is capable of acting or otherwise operating as a server for the applications. The mixer can then send the data stream to a codec **40** (e.g., application executable or otherwise operable by processor) capable of decoding the data stream, and returning a decoded data stream to the mixer. Similar to the application(s), the mixer is capable of inserting or queuing the decoded stream into one or more mixer-level media buffers **42** (e.g., memory **22),** and thereafter entering a reduced-power sleep state. Then, as and/or after the mixer inserts the data stream into the mixer-level buffer(s), the media device(s) **34** can read the queued data from the mixer-level media buffer(s).

When the audio device(s) **34** begin to run out of data to play (e.g., data left to be read from the mixer-level media buffer(s) decreases to below a threshold), the audio device(s) wake up or interrupt the mixer **38** out of its reduced-power sleep state, and request more data from the mixer. In response, the mixer checks to determine if there are a sufficient number of frames of data in the application-level buffer(s) **36** to fill the mixer-level buffer(s) **42.** If there are a sufficient number of frames (e.g., a number of frames sufficient to fill the mixer-level queue), the mixer is capable of immediately reading additional frames from the application-level buffer(s). If there are an insufficient number of frames, on the other hand, the mixer can wake up or interrupt the application(s) **32** out of their reduced-power sleep state, and request more data from the application(s), to which the application(s) can respond by requesting/receiving additional frame(s) of data from the source(s) **12,** and inserting or queuing the additional frames into the application-level buffer(s). The application(s) can then again enter the reduced-power sleep state, while the mixer can read a number of the additional frames from the application-level buffer(s).

Irrespective of exactly how the mixer **38** reads additional frames from the application-level buffer(s) **36,** the mixer can then again combine the frames into a single data stream, and send the data stream to a codec **40** to again decode the data stream, and return a decoded data stream to the mixer. The mixer can then again insert or queue the stream into the mixer-level media buffer(s), and enter a reduced-power sleep state. The media device(s) can then continue to read the queued data from the mixer-level media buffer(s). The operation of the respective elements of the media subsystem **30** can continue for a period of time, such as long as desired by a user of the processing element **14.**

As explained in the background section, audio processing is very time-critical by nature. In many conventional audio playback devices, the media subsystem reads data from memory and produces a block of audio samples from that data, while simultaneously playing out a previously produced block. If the processing or generation of a new block takes more time than playing out one block, then a gap (referred to as "drop-out") can be heard in the audio playback. In order to avoid such a drop-out, it is possible to queue up more than one produced block for playback in a buffer. In real-time applications, the goal can be to minimize the length of buffered audio; thereby also minimizing both memory consumption and the interactive latency (i.e., the time from user interaction to the corresponding change in the output audio signal). What is useful in a low-latency context may not be optimal for energy efficiency in devices, such as mobile devices, that have power consumption limitations. In such devices, the optimal buffering parameters for maximum battery life may be such that the subsystem wakeup point (e.g., application and/or mixer wakeup points) remains at its minimum value. Thus, controlling the buffering along the audio path in a media subsystem may be important for achieving best possible energy efficiency.

The media subsystem **30** of exemplary embodiments of the present invention therefore further includes a latency manager **44** enabling adaptive media playback whereby the latency manager is capable of adaptively tuning the subsystem for reduced power consumption or reduced latency based upon latency requirements of the subsystem. For example, the latency manager can adaptively tune the subsystem for reduced power consumption or reduced latency by adaptively sizing one or more of the application-level buffers 36 and/or one or more of the mixer-level buffers **42.** Additionally or alternatively, for example, the latency manager can adaptively and dynamically tune the subsystem by adaptively configuring the application(s) and/or mixer to insert more or less data into their respective buffers. Further, for example, the latency manager can adaptively and dynamically tune the subsystem by adaptively increasing or decreasing the wakeup point of the mixer **38** and/or one or more applications **32,** which may be desirable due to additional latency caused by the shut-down/wakeup cycle or other implementation details. Irrespective of exactly how the latency manager tunes the subsystem, however, the length of data inserted into one or more of the application-level buffers and/or one or more of the mixer-level buffers may be adaptively increased or decreased based upon latency requirements of the media subsystem.

Thus, for example, when the media subsystem **30** has a low-latency requirement, less data may be inserted into the application-level and/or mixer-level buffer(s) at each instance of waking up the respective application(s) **32** and/or mixer 38 to thereby reduce interactive latency (i.e., the time from user interaction to the corresponding change in the output audio signal). When the subsystem does not have a low-latency requirement, however, more data may be inserted into the application-level and/or mixer-level buffer(s) to reduce the wakeup points (extending the sleep state periods) of the application(s) and/or mixer, thereby decreasing power consumption of the processing element **14.**

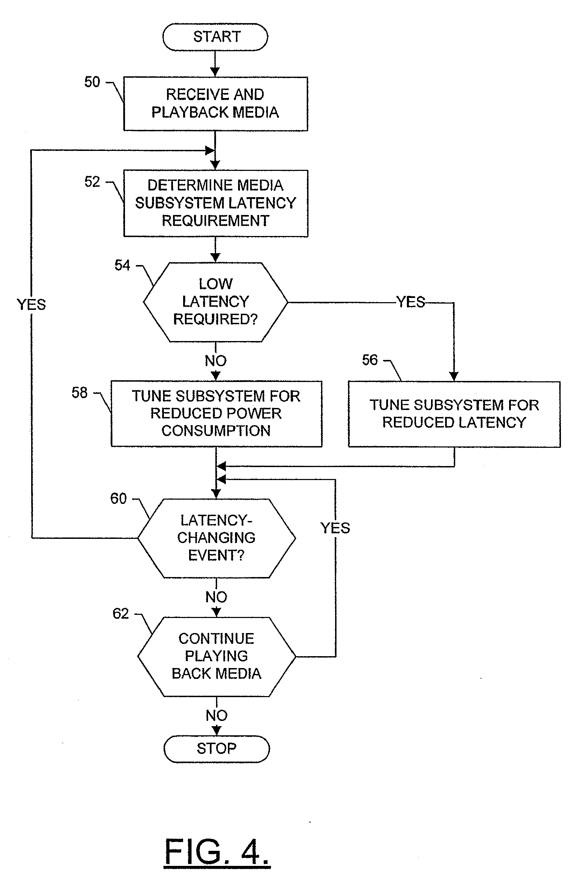

Reference is now made to FIG. 4, which illustrates various steps in a method of adaptive media buffering, in accordance with exemplary embodiments of the present invention. It should be understood that the steps may be implemented by various means, such as hardware and/or firmware, including those described above. In such instances, the hardware and/or firmware may implement respective steps alone and/or under control of one or more computer program products. In this regard, such computer program product(s) can include at least one computer-readable storage medium (e.g., memory **22)** and software including computer-readable program code portions, such as a series of computer instructions, embodied in the computer-readable storage medium.

As shown in block **50,** the illustrated method of adaptive media buffering includes the audio subsystem **30,** or more particularly one or more applications **32** of the audio subsystem, receiving and playing back media from one or more sources **12.** The media can be received and played back in a number of different manners, such as in the manner explained above with respect to FIG. 3. Before and/or as the audio subsystem receives and plays back media, the latency manager **44** can determine the latency requirement of the audio subsystem, as shown in block **52.** Such latency requirements may comprise, for example, latency requirements of one or more application(s) of the subsystem directing playback of media. In this regard, a number of applications may require a lower latency or delay between user interaction with the processing element **14,** or more particularly, the applications operating within the subsystem, and corresponding changes in media output by the subsystem. These applications may include, for example, telephony applications, gaming applications or the like. A number of other applications, however, may not require such a lower latency or delay; those applications including, for example, music or video playback applications.

More particularly, the latency manager **44** can determine or otherwise detect the latency requirements of the application(s) **32** in any of a number of different explicit and/or implicit manners. For example, the latency manager **44** can determine explicit latency requirements such as an absolute length of data (e.g., 5 milliseconds) and/or a relative length of data (e.g., percentage of the buffer capable of holding an absolute length of data) for insertion in one or more buffer(s) **36, 42** per wakeup of the application(s) during playback. Additionally or alternatively, for example, the latency manager **44** can determine implicit latency requirements such as based upon the buffering parameters used by the application(s). Such parameters may be determined, for example, by tracking of the length of data the application(s) and/or mixer write to their respective application-level and/or mixer-level buffer(s) before entering the sleep state to thereby determine a maximum latency the subsystem can tolerate.

Further, for example, the latency manager **44** can determine implicit latency requirements such as based upon the identit(ies) of the application(s) **32.** In this regard, a number of operating systems, such as the Symbian OS™, provide a means to identify application(s) operating within the media subsystem **30** by unique identifier (IDs) associated with those applications. These application IDs can then be matched with latency requirements associated with those applications (where, e.g., the application ID's and associated latency requirements can be maintained in a database of the processing element **14).** In such instances, the associated latency requirements may comprise absolute and/or relative lengths of data, and/or specify another predetermined measure of latency such as by specifying qualitative modes of the applications (e.g., "low-latency," "normal" and "power-save"). The predetermined measures or qualitative modes can then be further associated with absolute and/or relative lengths of data.

As will be appreciated, different applications **32** currently operating in the media subsystem **30** may have different latency requirements. In such instances, the subsystem latency may be determined from those of its applications in a number of different manners. For example, the subsystem latency can be set equal to that of the most demanding application (requiring the least latency). Thus, although the processing element **14** may sacrifice some power consumption by operating with more frequent wakeups of the subsystem elements, the subsystem can operate in a seamless manner with a reduced delay in the time from user interaction to the corresponding change in the output.

It should also be noted that the manners of determining the media subsystem **30** latency requirement explained above are solely provided for purposes of example, and that the latency requirement of the media subsystem can be defined or otherwise determined in any of a number of other manners. Such other manners may be, for example, based on events reflective of the subsystem's latency requirement. These events may include, for example, user-interaction events and/or higher-level events such as subsystem events and/or processing element events. More particularly, for example, a user-interaction event such as a user's activation of a user input interface 28 lock (e.g., keypad lock) may be reflective of the media subsystem not requiring a lower latency or delay. Also, for example, the processing element **14** may be configured to include a selectable operating mode for playing back media (e.g., music listening mode) that may be further reflective of the subsystem's latency requirement in that mode, such as by configuring the playback operating mode to be reflective of the subsystem not requiring a lower latency or delay. Further, for example, the processing element may be configured to include a manually and/or automatically-initiated power-save mode (e.g., entered after a predetermined period of inactivity) that may be further reflective of the subsystem's latency requirement in that mode, such as by configuring the power-save mode to be reflective of the subsystem not requiring a lower latency or delay. Similar to above, these events can then be further associated with absolute and/or relative lengths of data.

Irrespective of how the latency requirement of the media subsystem **30** is determined or otherwise detected, the latency manager **44** can thereafter tune the subsystem based upon that requirement. If the subsystem does require low latency, the latency manager can tune the subsystem for reduced latency, as shown in blocks **54** and **56;** and otherwise the latency manager can tune the subsystem for reduced power consumption, as shown in block **58.** In this regard, tuning the subsystem may include the latency manager dynamically configuring the application(s) **32** and/or mixer **38** to insert less data in their respective buffer(s) 36, **42** per wakeup (thereby increasing the wakeup frequency) for reduced latency, or to insert more data in their respective buffers per wakeup (thereby decreasing the wakeup frequency) for reduced power consumption.

The above process of determining the latency requirement of the media subsystem **30** and tuning the subsystem accordingly can be repeated a number of different instances during playback of the media, as shown in block **62.** In this regard, the latency manager **44** can be triggered to repeat the aforementioned process in any of a number of different manners, such as at a regular or irregular interval. Additionally or alternatively, as shown in block **60,** the latency manager can be triggered to repeat the aforementioned process in response to a latency-changing event. As suggested, these latency-changing events can comprise any of a number of events tending to change the subsystem latency requirement including, for example, new media data, an updated latency requirement provided to or otherwise determined by the latency manager, and/or an event (e.g., user-interaction event, subsystem event, processing-element event, etc.) reflective of the subsystem's latency requirement. Thus, as the latency requirement of the subsystem changes, the latency manager can reconfigure the subsystem based upon the change.

For example, presume the latency manager **44** determines subsystem latency requirement based upon the latency requirements of two applications **32** operating in the subsystem **30,** such as by setting the subsystem latency requirement equal to that of the lower-latency application. In such an instance, if the lower-latency application ceases to operate within the subsystem, the latency manager can determine a change in the subsystem latency requirement by now setting the latency requirement equal to that of the remaining application (tuning the subsystem for reduced power consumption). Alternatively, if an even lower-latency application begins to operate within the subsystem, the latency manager can determine a change in the subsystem latency requirement by setting the latency requirement equal to that of the now lowest-latency application (tuning the subsystem for reduced latency). This process can then continue during operation of the subsystem to playback media.

To further illustrate aspects of exemplary embodiments of the present invention, consider a media subsystem **30** including a mixer **38** capable of mixing the application audio, and two applications **32a, 32b** with different latency requirements (one having a low-latency requirement, and the other not). Also, consider for example that the mixer is capable of processing audio in 5 ms (millisecond) blocks, and that the mixer can always produce 5 ms of audio in less than 5 ms (operating system latencies included). Further, consider that the mixer is capable of independently queuing and streaming up to 30 buffers of audio, each buffer being 5 ms in length.

In the above example, because the mixer **38** can always produce the next 5 ms audio block in less than 5 ms, the media subsystem **30** can be configured for a mixer wakeup point of one buffer. Thus, when the mixer enters the sleep state, the mixer is not woken up before the media device starts reading the last 5 ms buffer in the media device's buffer. When both applications **32** are operating, or at least the application having the low-latency requirement is operating, the mixer can be tuned to produce just one buffer of audio samples at each instance of being woken up. This way, the mixer runs for a short period of time every 5 ms.

When the low-latency application **32** ceases to operate such that the application not having a low-latency requirement is operating, the audio subsystem 30 can be tuned differently. In this instance, when woken up, the mixer **38** can now run continuously to produce multiple 5-ms buffers of audio. In fact, as the media device **34** can queue up to 30 buffers, the mixer can be run to produce 29 buffers (145 ms) of audio, and enter the reduced-power sleep mode after the mixer-level buffer **42** is full. If it is presumed that producing a 5-ms buffer on the average requires 2.5 ms, the mixer is left with over 70 ms of time that it can use to go an efficient power-save mode, before needing to run again. When the buffering is in this high-latency mode, the subsystem **30** may take up to 150 ms from user interaction to a change in audio output, although the average latency even in this case may be much lower. Then if the same or a different low-latency application begins to operate, the audio subsystem can let the media device drain the queued buffers, until there's only one buffer in the queue. The mixer can then go back to the low-latency mode, providing just one buffer at a time for the hardware.

As explained above, the media subsystem **30** includes a mixer **38** capable of reading frames from the application-level buffer(s) and combining the frames from the different applications into a single data stream. In addition, the mixer is capable of communicating with a codec **40** to decode the data stream for the media device **34.** It should be understood, however, that the subsystem need not include a mixer or associated buffer(s) **42.** In such instances, one or more application(s) **32** may communicate with the codec to decode frames of data from respective source(s) **12** and insert those frames in respective application-level media buffer(s) **36,** from which the media device can read queued data.

According to one aspect of the present invention, the functions performed by one or more of the entities of the system, such as the processing element **14,** may be performed by various means, such as hardware and/or firmware, including those described above, alone and/or under control of a computer program product (client application). The computer program product for performing one or more functions of exemplary embodiments of the present invention includes a computer-readable storage medium, such as the non-volatile storage medium, and software including computer-readable program code portions, such as a series of computer instructions, embodied in the computer-readable storage medium.

In this regard, FIG. 3 is a flowchart of methods, systems and program products according to the invention. It will be understood that each block or step of the flowchart, and combinations of blocks in the flowchart, can be implemented by various means, such as hardware, firmware, and/or software including one or more computer program instructions. As will be appreciated, any such computer program instructions may be loaded onto a computer or other programmable apparatus (i.e., hardware) to produce a machine, such that the instructions which execute on the computer or other programmable apparatus create means for implementing the functions specified in the flowchart's block(s) or step(s). These computer program instructions may also be stored in a computer-readable memory that can direct a computer or other programmable apparatus to function in a particular manner, such that the instructions stored in the computer-readable memory produce an article of manufacture including instruction means which implement the function specified in the flowchart's block(s) or step(s). The computer program instructions may also be loaded onto a computer or other programmable apparatus to cause a series of operational steps to be performed on the computer or other programmable apparatus to produce a computer-implemented process such that the instructions which execute on the computer or other programmable apparatus provide steps for implementing the functions specified in the flowchart's block(s) or step(s).

Accordingly, blocks or steps of the flowchart support combinations of means for performing the specified functions, combinations of steps for performing the specified functions and program instruction means for performing the specified functions. It will also be understood that one or more blocks or steps of the flowchart, and combinations of blocks or steps in the flowchart, can be implemented by special purpose hardware-based computer systems which perform the specified functions or steps, or combinations of special purpose hardware and computer instructions.

Many modifications and other embodiments of the invention will come to mind to one skilled in the art to which this invention pertains having the benefit of the teachings presented in the foregoing descriptions and the associated drawings. Therefore, it is to be understood that the invention is not to be limited to the specific exemplary embodiments disclosed and that modifications and other embodiments are intended to be included within the scope of the appended claims. Although specific terms are employed herein, they are used in a generic and descriptive sense only and not for purposes of limitation.

## Claims

1. A media subsystem of a processing element, the media subsystem comprising:
a plurality of elements capable of processing media data including a plurality of instances wherein a first element is capable of inserting a length of media data into at least one buffer from which a second element is thereafter capable of reading the length of media data for subsequent output from the media subsystem, at least some of the instances being initiated by the second element waking up the first element from a reduced-power sleep state; and
a latency manager capable of determining a latency requirement of the media subsystem, the latency comprising a delay between an interaction with the processing element and a corresponding change in the output from the media subsystem,
wherein the latency manager is capable of dynamically tuning the length of media data inserted into the at least one buffer based upon the latency requirement, tuning the length of media data including increasing or decreasing the length of media data inserted into the at least one buffer during at least one instance, and
wherein the latency manager is capable of determining the latency requirement and tuning the length of media data as the plurality of elements process the media data.

2. A media subsystem according to Claim 1, wherein for the plurality of instances the first element is capable of receiving a length of decoded media data from a codec and capable of inserting the length of decoded media data into the at least one buffer from which the second element is thereafter capable of reading the length of decoded media data.

3. A media subsystem according to Claim 1, wherein for the plurality of instances the first element is capable of receiving a length of media data from a source and capable of inserting the length of media data into the at least one buffer from which the second element is thereafter capable of reading the length of media data.

4. A media subsystem according to Claim 3, wherein the first element is capable of inserting the length of media data into at least one first-level buffer from which the second element is thereafter capable of reading the length of media data,
wherein for the plurality of instances the second element is capable of communicating with a codec to decode the length of media data, and capable of inserting the length of decoded media data into at least one second-level buffer from which a third element is thereafter capable of reading the length of decoded media data, and
wherein the latency manager is capable of tuning the length of media data inserted into at least one of the at least one first-level buffer or the at least one second-level buffer.

5. A media subsystem according to Claim 3, wherein the latency manager is capable of determining a latency requirement of the media subsystem based upon a latency requirement of the first element.

6. A media subsystem according to Claim 5, wherein the first element comprises a plurality of first elements that, for the plurality of instances, are each capable of receiving a length of media data from a source and capable of inserting the length of media data into at least one respective buffer from which the second element is thereafter capable of reading the length of media data,
wherein each of the first elements has an associated latency requirement, and
wherein the latency manager is capable of setting the latency requirement of the subsystem equal to the lowest latency requirement of the first elements.

7. A media subsystem according to Claim 1, wherein the latency manager is capable of determining a latency requirement of the media subsystem based upon an event reflective of the latency requirement.

8. A media subsystem of a processing element, the media subsystem comprising:
a first means and a second means for processing media data including a plurality of instances wherein the first means inserts a length of media data into at least one buffer from which the second means thereafter reads the length of media data for subsequent output from the media subsystem, at least some of the instances being initiated by the second means waking up the first means from a reduced-power sleep state;
a third means for determining a latency requirement of the media subsystem, the latency comprising a delay between an interaction with the processing element and a corresponding change in the output from the media subsystem; and
a fourth means for dynamically tuning the length of media data inserted into the at least one buffer based upon the latency requirement, tuning the length of media data including increasing or decreasing the length of media data inserted into the at least one buffer during at least one instance,
wherein the third and fourth means are adapted to determine the latency requirement and tune the length of media data during processing the media data.

9. A media subsystem according to Claim 8, wherein for the plurality of instances the first means is adapted to receive a length of decoded media data from a codec and adapted to insert the length of decoded media data into the at least one buffer from which the second means is thereafter adapted to read the length of decoded media data.

10. A media subsystem according to Claim 8, wherein for the plurality of instances the first means is adapted to receive a length of media data from a source and adapted to insert the length of media data into the at least one buffer from which the second means is thereafter adapted to read the length of media data.

11. A media subsystem according to Claim 10 further comprising a fifth means,
wherein the first means is adapted to insert the length of media data into at least one first-level buffer from which the second means is thereafter adapted to read the length of media data,
wherein for the plurality of instances the second means is adapted to communicate with a codec to decode the length of media data, and adapted to insert the length of decoded media data into at least one second-level buffer from which the fifth means is thereafter adapted to read the length of decoded media data, and
wherein the fourth means is adapted to tune the length of media data inserted into at least one of the at least one first-level buffer or the at least one second-level buffer.

12. A media subsystem according to Claim 10, wherein the third means is adapted to determine a latency requirement of the media subsystem based upon a latency requirement of the first means.

13. A media subsystem according to Claim 12, wherein the first means comprises a plurality of executable sub-portions that, for the plurality of instances, are each adapted to receive a length of media data from a source and adapted to insert the length of media data into at least one respective buffer from which the second means is thereafter adapted to read the length of media data,
wherein each of the executable sub-portions of the first means has an associated latency requirement, and
wherein the third means is adapted to set the latency requirement of the subsystem equal to the lowest latency requirement of the executable sub-portions.

14. A media subsystem according to Claim 8, wherein the third means is adapted to determine a latency requirement of the media subsystem based upon an event reflective of the latency requirement.

15. A method of adaptively buffering media data in a media subsystem of a processing element, wherein the media subsystem includes a plurality of elements, and wherein the method comprises:
processing media data including a plurality of instances wherein a first element inserts a length of media data into at least one buffer from which a second element thereafter reads the length of media data for subsequent output from the media subsystem, at least some of the instances being initiated by the second element waking up the first element from a reduced-power sleep state;
determining a latency requirement of the media subsystem, the latency comprising a delay between an interaction with the processing element and a corresponding change in the output from the media subsystem; and
dynamically tuning the length of media data inserted into the at least one buffer based upon the latency requirement, tuning the length of media data including increasing or decreasing the length of media data inserted into the at least one buffer during at least one instance,
wherein the determining and tuning steps occur during processing the media data.

16. A method according to Claim 15, wherein for the plurality of instances the first element receives a length of decoded media data from a codec and inserts the length of decoded media data into the at least one buffer from which the second element thereafter reads the length of decoded media data.

17. A method according to Claim 15, wherein for the plurality of instances the first element receives a length of media data from a source and inserts the length of media data into the at least one buffer from which the second element thereafter reads the length of media data.

18. A method according to Claim 17, wherein the first element inserts the length of media data into at least one first-level buffer from which the second element portion thereafter reads the length of media data,
wherein for the plurality of instances the second element communicates with a codec to decode the length of media data, and inserts the length of decoded media data into at least one second-level buffer from which a third element thereafter reads the length of decoded media data, and
wherein the tuning step comprises tuning the length of media data inserted into at least one of the at least one first-level buffer or the at least one second-level buffer.

19. A method according to Claim 17, wherein the determining step comprises determining a latency requirement of the media subsystem based upon a latency requirement of the first element.

20. A method according to Claim 19, wherein the first element comprises a plurality of first elements that, for the plurality of instances, each receive a length of media data from a source and insert the length of media data into at least one respective buffer from which the second element thereafter reads the length of media data,
wherein each of the first elements of the first element has an associated latency requirement, and
wherein the determining step comprises setting the latency requirement of the subsystem equal to the lowest latency requirement of the first elements.

21. A method according to Claim 15, wherein the determining step comprises determining a latency requirement of the media subsystem based upon an event reflective of the latency requirement.

22. A computer program product for adaptively buffering media data in a media subsystem of a processing element, the computer program product comprising a computer-readable storage medium having computer-readable program code portions stored therein, the computer-readable program portions comprising:
a first executable portion and a second executable portion for processing media data including a plurality of instances wherein the first executable portion inserts a length of media data into at least one buffer from which the second executable portion thereafter reads the length of media data for subsequent output from the media subsystem, at least some of the instances being initiated by the second executable portion waking up the first executable portion from a reduced-power sleep state;
a third executable portion for determining a latency requirement of the media subsystem, the latency comprising a delay between an interaction with the processing element and a corresponding change in the output from the media subsystem; and
a fourth executable portion for dynamically tuning the length of media data inserted into the at least one buffer based upon the latency requirement, tuning the length of media data including increasing or decreasing the length of media data inserted into the at least one buffer during at least one instance,
wherein the third and fourth executable portions are adapted to determine the latency requirement and tune the length of media data during processing the media data.

23. A computer program product according to Claim 22, wherein for the plurality of instances the first executable portion is adapted to receive a length of decoded media data from a codec and adapted to insert the length of decoded media data into the at least one buffer from which the second executable portion is thereafter adapted to read the length of decoded media data.

24. A computer program product according to Claim 22, wherein for the plurality of instances the first executable portion is adapted to receive a length of media data from a source and adapted to insert the length of media data into the at least one buffer from which the second executable portion is thereafter adapted to read the length of media data.

25. A computer program product according to Claim 24 further comprising a fifth executable portion,
wherein the first executable portion is adapted to insert the length of media data into at least one first-level buffer from which the second executable portion is thereafter adapted to read the length of media data,
wherein for the plurality of instances the second executable portion is adapted to communicate with a codec to decode the length of media data, and adapted to insert the length of decoded media data into at least one second-level buffer from which the fifth executable portion is thereafter adapted to read the length of decoded media data, and
wherein the fourth executable portion is adapted to tune the length of media data inserted into at least one of the at least one first-level buffer or the at least one second-level buffer.

26. A computer program product according to Claim 24, wherein the third executable portion is adapted to determine a latency requirement of the media subsystem based upon a latency requirement of the first executable portion.

27. A computer program product according to Claim 26, wherein the first executable portion comprises a plurality of executable sub-portions that, for the plurality of instances, are each adapted to receive a length of media data from a source and adapted to insert the length of media data into at least one respective buffer from which the second executable portion is thereafter adapted to read the length of media data,
wherein each of the executable sub-portions of the first executable portion has an associated latency requirement, and
wherein the third executable portion is adapted to set the latency requirement of the subsystem equal to the lowest latency requirement of the executable sub-portions.

28. A computer program product according to Claim 22, wherein the third executable portion is adapted to determine a latency requirement of the media subsystem based upon an event reflective of the latency requirement.
